(19) Europäisches Patentamt
European Patent Office
Office européen des brevets

(11) **EP 2 859 390 B1**

(12) **EUROPÄISCHE PATENTSCHRIFT**

(45) Veröffentlichungstag und Bekanntmachung des Hinweises auf die Patenterteilung:
**30.05.2018  Patentblatt 2018/22**

(21) Anmeldenummer: **13726235.8**

(22) Anmeldetag: **03.06.2013**

(51) Int Cl.:
*G02B 6/36* (2006.01)

(86) Internationale Anmeldenummer:
**PCT/EP2013/061410**

(87) Internationale Veröffentlichungsnummer:
**WO 2013/182529 (12.12.2013 Gazette 2013/50)**

(54) **FASERKOPPLER**

FIBER COUPLER

COUPLEUR À FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2012  DE 102012209630**

(43) Veröffentlichungstag der Anmeldung:
**15.04.2015  Patentblatt 2015/16**

(73) Patentinhaber: **TRUMPF Laser GmbH**
**78713 Schramberg (DE)**

(72) Erfinder:
• **KOZAK, Marcin**
**14513 Teltow (DE)**
• **KUMKAR, Malte**
**99425 Weimar (DE)**
• **RIEDEL, Peter**
**07745 Jena (DE)**
• **ZIMER, Hagen**
**78655 Dunningen-Seedorf (DE)**

(74) Vertreter: **Patentanwälte Geyer, Fehners & Partner mbB**
**Perhamerstrasse 31**
**80687 München (DE)**

(56) Entgegenhaltungen:
**EP-A- 0 107 840          EP-A1- 2 071 376**
**WO-A1-2007/015577     US-A- 3 912 362**
**US-A1- 2010 195 195**

**Beschreibung**

Die vorliegende Erfindung betrifft einen Faserkoppler mit einer rohrförmigen Hüllstruktur und mehreren in der Hüllstruktur angeordneten Lichtleitfasern, die jeweils einen Faserkern und einen diesen umgebenden Fasermantel aufweisen, um Laserstrahlung zu führen, und die sich jeweils vom ersten bis zum zweiten Ende der Hüllstruktur erstrecken, wobei die Hüllstruktur einen Verjüngungsabschnitt aufweist, der sich in einer ersten Richtung vom ersten zum zweiten Ende hin verjüngt.

Solche Faserkoppler zur geometrischen Kopplung von in den Lichtleitfasern geführten Laserstrahlung werden beispielsweise dadurch gebildet, daß die Lichtleitfasern gezogen und verschmolzen werden. Zur Erzielung einer hohen Brillanz im aus dem Faserkoppler austretenden Ausgangsstrahlenbündel kann das Verhältnis von Kerndurchmesser zu Gesamtdurchmesser der Lichtleitfasern zur Ausgangsseite hin im Koppler gesteigert werden, wie z.B. in der EP 2 071 376 A1 und in der US 3,912,362 beschrieben ist. Alternativ kann das Verhältnis von Modenfelddurchmesser der in den Lichtleitfasern geführten Laserstrahlung zu Kerndurchmesser im Koppler angehoben werden (US 2010/0278486 A1, US 2010/0189138 A1), wobei bei einer Verjüngung durch Ziehen der Lichtleitfasern von mehr als dem Faktor drei komplexe Brechzahlstrukturen erforderlich sind, um eine hohe Brillanz zu erzielen.

Ausgehend hiervon ist es Aufgabe der Erfindung, einen Faserkoppler bereitzustellen, der die in den Lichtleitfasern geführte Laserstrahlung in ein Ausgangsstrahlenbündel transferiert, wobei die Brillanz der aus den einzelnen Lichtleitfasern austretende Ausgangsstrahlen, die das Ausgangsstrahlenbündel bilden, möglichst beibehalten wird.

Die Aufgabe wird durch einen Faserkoppler mit einer rohrförmigen Hüllstruktur und mehreren in der Hüllstruktur angeordneten Lichtleitfasern, die jeweils einen Faserkern und einen diesen umgebenden Fasermantel aufweisen, um Laserstrahlung zu führen, und die sich jeweils vom ersten bis zum zweiten Ende der Hüllstruktur erstrecken, gelöst, wobei die Hüllstruktur einen Verjüngungsabschnitt aufweist, der sich in einer ersten Richtung vom ersten zum zweiten Ende hin verjüngt, wobei im Verjüngungsabschnitt bei jeder Lichtleitfaser in der ersten Richtung sowohl ein erstes Verhältnis von Durchmesser des Faserkerns zu Durchmesser des Fasermantels als auch ein zweites Verhältnis von Durchmesser des Modenfeldes der in der Lichtleitfaser geführten Laserstrahlung zu Durchmesser des Faserkerns zunimmt.

Mit einem solchen Faserkoppler kann die gewünschte geometrische Kopplung der aus den Lichtleitfasern austretenden Laserstrahlung (Ausgangsstrahlen) bei bestmöglicher Brillanz des durch die austretende Laserstrahlung gebildeten gemeinsamen Ausgangsstrahlenbündels erreicht werden. Darüber hinaus wird die Brillanz der aus den einzelnen Lichtleitfasern austretenden Ausgangsstrahlen nur unwesentlich verschlechtert (die Laserstrahlungen haben keine oder nur eine geringe Kopplung untereinander erfahren), so daß die Ausgangsstrahlen des Ausgangsstrahlenbündels, sofern dies gewünscht ist, einzeln adressierbar bzw. einzeln genutzt werden können. Unter einer nur unwesentlichen Verschlechterung wird hier insbesondere verstanden, daß die Brillanz mindestens 90% oder bevorzugt mindestens 95% der ursprünglichen Brillanz beträgt. Das Ausgangsstrahlenbündel weist eine höhere Füllung des Phasenraums auf und erlaubt aufgrund der einzelnen adressierbaren Ausgangsstrahlen eine gezielte zeitliche und räumliche Strahlformung, da Lage- und Strahlparameter jedes aus einer Lichtleitfaser austretenden Laserstrahles eindeutig definiert sind.

Bei dem erfindungsgemäßen Faserkoppler wird der in den einzelnen Lichtleitfasern jeweils geführte Eingangsstrahl in einzeln austretende Ausgangsstrahlen transferiert, wobei die Brillanz der einzeln austretenden Ausgangsstrahlen weitgehend der der einzeln geführten Eingangsstrahlen entspricht. Der erfindungsgemäße Faserkoppler ermöglicht eine gezielte Anordnung der einzeln austretenden Ausgangsstrahlen, wobei diese Anordnung insbesondere auch die individuelle Adressierung der einzelnen Ausgangsstrahlen zuläßt, und ermöglicht, daß das Ausgangsstrahlenbündel aus mehreren einzeln austretenden Anteilen (die aus den Lichtleitfasern austretende Ausgangsstrahlen) mit in Summe hoher Brillanz gebildet werden kann.

So kann z .B. mit dem erfindungsgemäßen Faserkoppler eine Eingangsstrahlung in Form von in zwei einzelnen Fasern geführter Grundmodestrahlung in ein Bündel von zwei Ausgangsstrahlen mit weitgehend parallelen Strahlachsen transferiert werden, das am zweiten Ende der Hüllstruktur eine Strahltaille des Grundmodes der einzeln austretenden Ausgangsstrahlen aufweist, wobei der Abstand der Achsen kleiner als der Grundmodedurchmesser ist und die Leistung in diesem Grundmode mindestens 90% der eingekoppelten Grundmodeleistung entspricht.

Die Lichtleitfasern des erfindungsgemäßen Faserkopplers sind bevorzugt Fasern, die auch zum Transport von Laserstrahlung über größere Distanzen geeignet sind. Die Hüllstruktur kann eine Innenrohrstruktur und ein umgebendes Hüllrohr aufweisen oder aus diesen bestehen. Insbesondere kann der Faserkoppler monolithisch ausgebildet sein.

Bei dem erfindungsgemäßen Faserkoppler sind die Lichtleitfasern bevorzugt grundmodige oder niedermodige Lichtleitfasern, entsprechend einem V-Parameter zwischen 2,4 und 4,5. Für Stufenindexfasern ergibt sich der V-Parameter aus dem Kerndurchmesser $d_1$, der Wellenlänge $\lambda$ und der numerischen Apertur

$( NA = \sqrt{n_1{}^2 - n_2{}^2} )$ wobei $n_1$ und $n_2$ für den Brechungsindex des Kerns bzw. des Mantels stehen:

$$V = \frac{\pi d_1 NA}{\lambda}$$

Somit weisen die Lichtleitfasern des Faserkopplers eingangsseitig (also vor dem Verjüngungsabschnitt) bevorzugt einen V-Parameter zwischen 2,4 und 4,5, insbesondere zwischen 2,8 und 4,5 auf. Aufgrund des Verjüngungsabschnittes weist der V-Parameter der Lichtleitfaser des Faserkopplers ausgangsseitig bevorzugt einen Wert aus dem Bereich von 1,8 bis 2,0 auf.

Für Fasern mit komplexerem Brechungsindexprofil kann entsprechend ein äquivalenter V-Parameter eingesetzt werden.

Bei einer Wellenlänge von 1,0 - 1,1 μm werden bevorzugt Fasern eingesetzt, die vor dem Vergrößern des Verhältnisses von Kern- zu Manteldurchmesser und/oder von Modenfelddurchmesser zu Kerndurchmesser einen Kerndurchmesser zwischen 10 und 25 μm und einem Manteldurchmesser zwischen 125 und 250 μm bei Modenfeldern zwischen 8 und 25 μm aufweisen. Ferner weisen die Fasermäntel der Lichtleitfasern bevorzugt ein homogenes Brechzahlprofil auf.

Die Lichtleitfasern sind am zweiten Ende direkt und/oder über die Hüllstruktur miteinander verschmolzen. Die Lichtleitfasern sind auch wenigstens im Verjüngungsabschnitt direkt und/oder über die Hüllstruktur verschmolzen.

Die Lichtleitfasern sind außerhalb der Hüllstruktur, vor dem ersten Ende, nicht miteinander verschmolzen.

Da die Lichtleitfasern am ersten Ende einzeln aus dem Faserkoppler herausgeführt und ohne Freistrahlschnittstelle bis zum verschmolzenen zweiten Ende geführt werden, kann der erfindungsgemäße Faserkoppler als monolithischer Faserkoppler bezeichnet werden. Bevorzugt erfolgt der Übergang vom nicht verschmolzenen zum vollkommen verschmolzenen Bereich an einer Stelle im Faserkoppler, an dem die Vergrößerung des Kerndurchmessers relativ zum Manteldurchmesser und Vergrößerung von Modenfelddurchmesser relativ zu Kerndurchmesser der Lichtleitfasern noch unter einem Faktor 1,2 bezüglich des unverjüngten Durchmessers liegt, so daß die Fasern noch 80% oder mehr ihres ursprünglichen Gesamtdurchmesser (Durchmesser des Quarzmantels) aufweisen. Damit wird in vorteilhafter Weise erreicht, daß beim Verschmelzen auftretende Kräfte nur solche Verformungen im Fasermantel und im Faserkern bedingen, die sich nur unwesentlich auf die Führungseigenschaften der Lichtleitfasern auswirken.

Bei dem erfindungsgemäßen Faserkoppler kann für die Zunahme des ersten Verhältnisses die Dicke des Fasermantels in der ersten Richtung abnehmen. Dies läßt sich leicht herstellen z.B. durch "Entfernen" der Fasermäntel der Lichtleitfassern z.B. mithilfe eines Ätzprozesses. Alternativ kann das Brechzahlprofil der Fasermäntel geändert werden, so daß ein Teil des Fasermantels als Kern fungiert Dies kann z.B. über thermisch induzierte Diffussionsprozesse realisiert werden.

Ferner kann bei dem erfindungsgemäßen Faserkoppler der maximale Wert des zweiten Verhältnisses so gewählt sein, daß trotz einer Überlappung der (geführten) Moden in benachbarte Lichtleitfasern noch eine individuelle Strahlführung in jeder Lichtleitfaser vorliegt. Hierzu wird z.B. sichergestellt, daß über die Lichtleitfaser hinaus ein homogener Brechungsindex vorliegt. Dies wird durch die Wahl der Geometrie und des Materials des Fasermantels und der Hüllstruktur oder anderen die Räume zwischen den Fasern auffüllende Materialien erreicht, so daß um jeden zur Lichtführung genutzten Kern der Lichtleitfaser ein Ring (im Querschnitt gesehen) mit nahezu homogenem Brechungsindex vorliegt.

Bei dem erfindungsgemäßen Faserkoppler kann für die Zunahme des zweiten Verhältnisses der Durchmesser des Faserkerns in der ersten Richtung abnehmen. Dies läßt sich leicht durch Ziehen des Faserkopplers erreichen. Um die Prozesssicherheit zu gewährleisten und Störungen zu vermeiden, sollte nur der verschmolzene Bereich gezogen werden. Durch Ausziehen der Lichtleitfaser wird der Kern kleiner und das Modenfeld erstreckt sich auch zunehmend in den Außenbereich, wobei die Parameter so zu wählen sind, daß sich das Modenfeld nicht nennenswert bis in den nächsten Kern erstreckt. Damit wird der geometrische Raum zur Überlagerung der einzelnen Laserstrahlungen aus den einzelnen Lichtleitfasern optimal genutzt und dabei gleichzeitig sichergestellt, daß die aus den einzelnen Lichtleitfasern austretenden Ausgangsstrahlen noch einzeln adressierbar ist.

Bei dem erfindungsgemäßen Faserkoppler kann die Hüllstruktur eine Innenrohrstruktur (die z.B. als Multikapillare ausgebildet ist) aufweisen, die für jede Lichtleitfaser genau eine Durchgangsbohrung umfaßt. Mit einer solchen Innenrohrstruktur kann der Faserkoppler leicht in der gewünschten Genauigkeit hergestellt werden.

Es wird ferner ein Verfahren zur Herstellung eines Faserkopplers bereitgestellt, bei dem mehrere Lichtleitfasern, die jeweils einen Faserkern und einen diesen umgebenden Fasermantel aufweisen, um Laserstrahlung zu führen, mit einer in Längsrichtung der Lichtleitfasern abnehmenden Manteldicke bereitgestellt werden, die mehreren Lichtleitfasern in eine rohrförmige Roh-Hüllstruktur so eingeführt werden, daß sie nebeneinander liegen, die Lichtleitfasern direkt und/oder über die Roh-Hüllstruktur miteinander verschmolzen werden und die Roh-Hüllstruktur mit den eingeführten Lichtleitfasern in einem Verjüngungsabschnitt in einer ersten Richtung verjüngt wird, so daß im Verjüngungsabschnitt bei jeder Lichtleitfaser in der ersten Richtung sowohl ein erstes Verhältnis von Durchmesser des Faserkerns zu Durchmesser des Fasermantels als auch ein zweites Verhältnis von Durchmesser des Modenfeldes der in der Lichtleitfaser zu führenden Laserstrahlung zu Durchmesser des Faserkerns zunimmt.

Mit diesem Verfahren kann ein erfindungsgemäßer Faserkoppler reproduzierbar mit hoher Genauigkeit hergestellt werden.

Bei dem erfindungsgemäßen Verfahren kann die Roh-Hüllstruktur eine Innenrohrstruktur (z.B. eine Multikapillare) mit Bohrungen für jede Lichtleitfaser aufweisen, wobei in jede der Bohrungen genau eine der Lichtleitfasern eingeführt wird.

Alternativ kann bei dem erfindungsgemäßen Verfahren die Roh-Hüllstruktur ein Rohr mit einer Bohrung aufweisen, in die die Lichtleitfasern eingeführt werden und dann direkt aneinander liegen.

Insbesondere kann bzw. können die Bohrung(en) verjüngt ausgebildet werden bevor die Lichtleitfaser eingeführt werden.

Ferner können beim Verschmelzen der Lichtleitfasern die Lichtleitfasern mit Zugspannung beaufschlagt werden. Ferner kann auch die rohrförmige Roh-Hüllstruktur mit einer Zugspannung beaufschlagt werden. Des weiteren kann optional die Bohrung bzw. die Bohrungen mit Unterdruck beaufschlagt werden. Diese Maßnahmen unterstützen ein unerwünschtes Biegen der Lichtleitfasern zu vermeiden.

Das erfindungsgemäße Herstellungsverfahren kann auch noch die im Zusammenhang mit dem erfindungsgemäßen Faserkoppler beschriebenen Herstellungsschritte aufweisen.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1      eine perspektivische Ansicht einer ersten Ausführungsform des erfindungsgemäßen Faserkopplers;

Fig. 2      ein Längsschnitt des Faserkopplers gemäß Fig. 1;

Fig. 3A      eine Schnittansicht entlang des Schnittes A-A aus Fig. 2;

Fig. 3B      eine Schnittansicht entlang des Schnittes B-B aus Fig. 2;

Fig. 3C      eine Schnittansicht entlang des Schnittes C-C aus Fig. 2;

Fig. 4      eine Lichtleitfaser mit sich verjüngendem Mantel;

Fig. 5      eine perspektivische Darstellung einer verjüngten Roh-Hüllstruktur mit Innenrohrstruktur;

Fig. 6      einen Längsschnitt der Roh-Hüllstruktur mit Innenrohrstruktur gemäß Fig. 5;

Fig. 7      ein Diagramm zum V-Parameter der Lichtleitfasern des erfindungsgemäßen Faserkopplers,

Fig. 8      eine Seitenansicht des erfindungsgemäßen Faserkopplers;

Fig. 9A      eine Schnittansicht entlang des Schnittes A-A aus Fig. 8;

Fig. 9B      eine Schnittansicht entlang des Schnittes B-B aus Fig. 8;

Fig. 9C      eine Schnittansicht entlang des Schnittes C-C aus Fig. 8, und

Fig. 10      eine Schnittansicht eines Faserkopplers gemäß einer weiteren Ausführungsform.

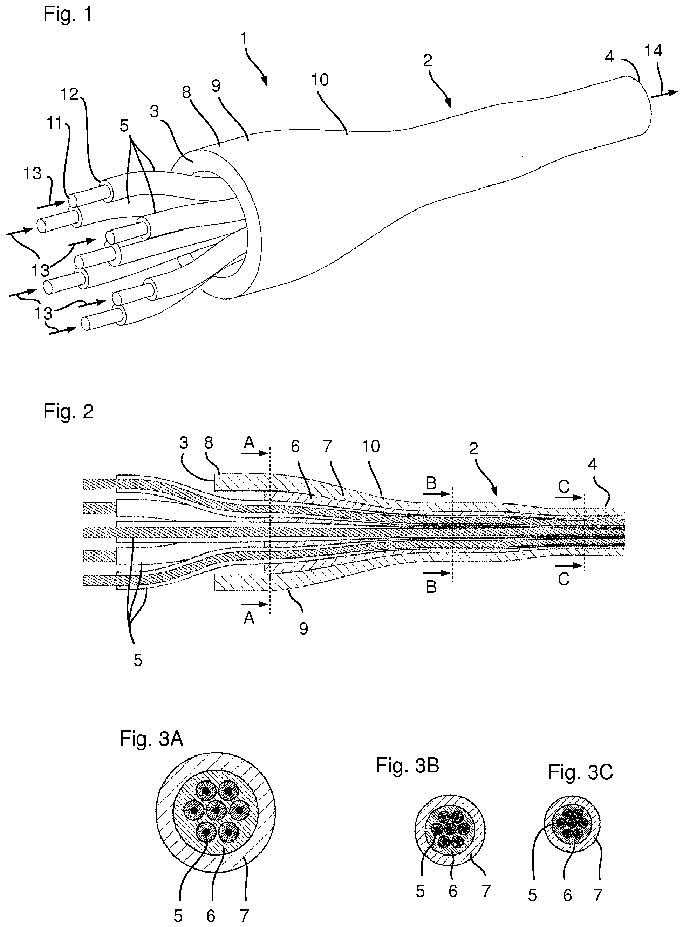

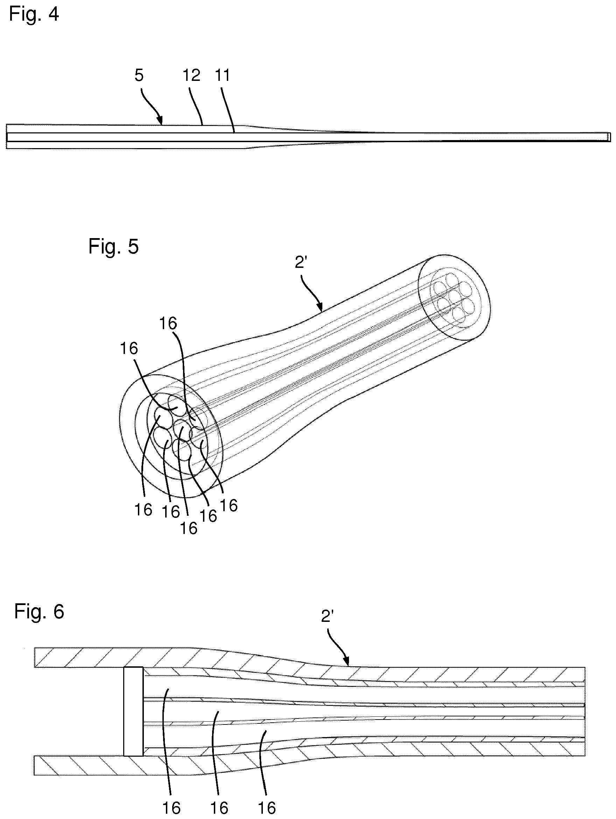

Bei der in Fig. 1 - 3C gezeigten Ausführungsform umfaßt der erfindungsgemäße Faserkoppler 1 eine rohrförmige Hüllstruktur 2 mit zwei gegenüberliegenden Enden 3, 4 sowie mehrere (hier sieben) Lichtleiterfaser 5, die jeweils einen Kern und einen darum angeordneten Mantel aufweisen, die typischerweise aus Quarzglas gebildet sind, die nebeneinander angeordnet sind und sich vom ersten bis zum zweiten Ende 3, 4 erstrecken, wobei sie über das erste Ende 3 in die Hüllstruktur 2 einstehen, wie insbesondere in Fig. 1 und 2 gezeigt ist. Zum besseren Verständnis ist der Überstand der Fasern verkleinert und der Mantel im vorderen Teil weggenommen worden, sowie der Kern wie auch in Fig. 3 und 4 vergrößert dargestellt.

Die rohrförmige Hüllstruktur 2 umfaßt eine als Multikapillare 6 ausgebildete Innenrohrstruktur, die für jede Lichtleitfaser 5 eine Bohrung aufweist, in die die entsprechende Lichtleitfaser 5 eingebettet ist, sowie ein die Multikapillare 6 umgebendes Hüllrohr 7. Das Hüllrohr 7 steht am ersten Ende 3 etwas über die Multikapillare 6 über. Dieser überstehende Abschnitt des Hüllrohrs 7 bildet einen Eintrittsbereich 8, der die Lichtleitfaser 5 lediglich als Bündel und nicht einzeln umschließt und in dem die Lichtleitfasern 5 nicht mit der Innenrohrstruktur 6 verschmolzen sind.

An den Eintrittsbereich 8 schließt sich ein Verjüngungsbereich 10 an, wobei ein Übergang 9 zwischen beiden Bereichen 8 und 10 dadurch gekennzeichnet ist, daß in diesem der Verbindungszustand der Lichtleitfasern 5 mit der Innenrohrstruktur 6 von in vollem Umfang unverschmolzen auf vollumfänglich verschmolzen übergeht. Die axiale Länge des Übergangs ist üblicherweise kleiner oder gleich als der Durchmesser einer der Lichtleitfasern 5. Dabei erfolgt die wesentliche aber nicht zwangsläufig jegliche Verjüngung der Lichtleitfasern in diesem Verjüngungsbereich.

Der Verjüngungsbereich 10 erstreckt sich anschließend an den Übergang 9 in der ersten Richtung bis zum zweiten Ende 4 und hier verjüngt sich der Außendurchmesser der Lichtleitfasern in dieser ersten Richtung.

Die Lichtleitfasern 5 können natürlich auch schon im Übergang 9 verjüngt sein. Für den Übergang 9 ist wesentlich, daß in diesem die Änderung von unverschmolzen bis vollumfänglich verschmolzen vorliegt.

Die Lichtleitfasern 5 weisen jeweils einen Faserkern 11, mit bevorzugt rotationssymmetrischem Brechzahlprofil, und einen diesen umgebenden Fasermantel 12 mit homogener Brechzahl auf. Das Brechzahlprofil und die Geometrie der Lichtleitfasern 5 sind so gewählt, daß diese in dem nicht im Koppler 1 entstehenden Abschnitt (also der Teil links vom Koppler in Fig. 2) und innerhalb des Eintrittsbereiches 8 eine Führung von Laserstrahlung im Faserkern 11, bevorzugt als Grundmodestrahlung, höchstens jedoch als niedermodige Strahlung, sicherstellen.

Ferner kann die Länge der Lichtleitfasern 5 links vom ersten Ende 3 kleiner oder insbesondere größer als dargestellt sein.

Wie insbesondere den Darstellungen in Fig. 2 und 3A - 3C zu entnehmen ist, erfährt jede Lichtleitfaser 5 im Verjüngungsbereich (insbesondere zwischen den Schnitten A-A und B-B in Fig. 2) eine Steigerung eines ersten Verhältnisses von Kerndurchmesser zu Gesamtdurchmesser. Des weiteren erfährt jede Lichtleitfaser 5 eine Steigerung eines zweiten Verhältnisses von Modenfelddurchmesser der in der Lichtleitfaser 5 geführten Laserstrahlung zu Kerndurchmesser. Diese Steigerung des zweiten Verhältnisses liegt bevorzugt nahe am zweiten Ende 4 vor, insbesondere ab dem Schnitt B-B oder ab dem Schnitt C-C gemäß Fig. 2.

Durch diese Ausbildung des Faserkopplers 1 wird erreicht, daß die als Eingangsstrahlen 13 (durch Pfeile in Fig. 1 und 2 angedeutet) in den Lichtleitfasern 5 geführte Laserstrahlung bis zum zweiten Ende 4 in den Lichtleitfasern 5 geführt und jeweils als Ausgangsstrahlen und damit als Teil des Ausgangsstrahlenbündels 14 abgegeben wird, wobei jede Lichtleitfaser 5 den Eingangsstrahl 13 so führt, daß seine Brillanz im Ausgangsstrahl möglichst gut erhalten bleibt. Da jedoch die Ausgangsstrahlen der einzelnen Lichtleitfasern 5 räumlich deutlich dichter gepackt sind, kann das gemeinsame Ausgangsstrahlenbündel 14, das durch die einzelnen Ausgangsstrahlen gebildet ist, bereitgestellt werden, dessen Brillanz deutlich besser ist als die aller Eingangsstrahlen 13 am ersten Ende 3 des Faserkopplers 1. Ferner liegen die einzelnen Ausgangsstrahlen des Ausgangsstrahlungsbündels 14 noch als separate grundmodige bzw. niedermodige Strahlen vor, was für die weitere Verwendung bzw. den Einsatz der Ausgangsstrahlen von Vorteil sein kann, insbesondere im Bereich der Materialbearbeitung mit Laserstrahlung, wie z.B. Schneiden oder Schweißen von metallischen Werkstücken.

Bei dem erfindungsgemäßen Faserkoppler 1 sind die Lichtleitfasern 5 über den gesamten Verjüngungsbereich 10 bzw. zumindest über weitgehend den gesamten Verjüngungsbereich 10 teilweise oder vollständig mit der Multikapillare 6 verschmolzen.

Wie in Fig 2 gezeigt, kann der Außendurchmesser der Lichtleitfaser 5 schon am Übergang 9 und damit dem Eintritt in die Multikapillare 6 verjüngt sein. Dies erhöht die Prozesssicherheit da der Kapillardurchmesser und der Faserdurchmesser so angepasst werden können, daß ein weitgehender Formschluss entsteht und die Faser sich beim Verschmelzen nicht verschieben, verformen bzw. verbiegen kann. Dies führt ferner zu dem Vorteil, daß dadurch Störungen durch Oberflächenspannungen, die im Herstellungsprozeß beim Verschmelzen auftreten können, sehr gut vermieden werden können. Typischerweise sind die Lichtleitfasern 5 am Übergang 9 noch nicht nennenswert verjüngt. Typisch ist hier eine maximale Verjüngung auf nicht unter 80 % des ursprünglichen Gesamtdurchmessers der jeweiligen Lichtleitfaser 5. Zudem erfolgt die vollumfängliche Verschmelzung der einzelnen Lichtleitfasern mit der Multikapillare in Achsrichtung auf einer Länge von deutlich unter einem Faserradius.

Die Hüllstruktur 2 und somit die Multikapillare 6 umschließt die einzelnen Lichtleitfasern 5 im verschmolzenen Bereich derart, daß der runde Querschnitt der Faserkerne 11 erhalten bleibt und auch keine die Strahlführung nennenswert beeinflussende Biegung der Lichtleitfasern 5 vorliegt. Weiterhin ist der Faserkoppler 1 im verschmolzenen Bereich so ausgeführt, dass durch entsprechende Auswahl des Materials der Hüllstruktur 2 und insbesondere der Multikapillare 6 für jede einzelne Lichtleitfaser 5 um jeden Kern ein Bereich vorliegt, dessen Brechzahl der Brechzahl des Fasermantels entspricht, dessen Ausdehnung in radialer Richtung mindestens dem Kernradius der Lichtleitfaser 5 entspricht. Zusätzlich ist dieser Bereich für die geführte Strahlung bevorzugt hochtransmittierend und gering streuend.

Der Faserkoppler 1 kann beispielsweise unter Verwendung von vorab durch Abtrag des Fasermantels 12 sich verjüngenden einzelnen Lichtleitfasern 5 hergestellt werden, die in eine vorgefertigte Roh-Hüllstruktur eingesetzt werden.

Solche sich verjüngende Lichtleitfasern 5 werden typischerweise aus Lichtleitfasern mit konstantem Außendurchmesser dadurch hergestellt, daß in Längsrichtung zunehmend Mantelmaterial abgetragen wird. Die Abtragung des Mantelmaterials wird bevorzugt so durchgeführt, daß der Kerndurchmesser konstant bleibt. Dies kann beispielsweise durch ein chemisches Abtragsverfahren oder alternativ durch Plasma oder Laserabtrag realisiert werden. Eine solche verjüngte Lichtleitfaser 5 ist in Fig. 4 dargestellt.

Alternativ kann die Lichtleitfaser so präpariert werden, daß durch Erhitzen der Faser eine Diffusion der Dotierung zwischen Mantel- und Kernbereich bewirkt wird und sich somit das Brechzahlprofil derart ändert, dass dieses einem vergrößerten Kern entspricht.

Die Roh-Hüllstruktur wird aus einer Multikapillare (Innenrohrstruktur) mit hier sieben parallelen Bohrungen konstantem Durchmessers hergestellt, auf die das Hüllrohr so geschmolzen wird, daß der Eintrittsbereich 8 durch Überstand über die Multikapillare gebildet wird und der Anfang der Multikapillare eine auf Grund der über kurze Distanz erfolgenden Querschnittsänderung der Bohrung einen Schmelzstopp bildet. Dann wird die Roh-Hüllstruktur durch thermisches Ausziehen verjüngt, so daß die in Fig. 5 und 6 gezeigte Roh-Hüllstruktur 2' vorliegt, die nun sieben sich verjüngende Durchgangsbohrungen 16 aufweist, die sich jeweils vom ersten bis zum zweiten Ende 3, 4 erstrecken. Der Durchmesser der Durchgangsbohrungen 16 ist so gewählt, daß er die minimale Wandstärke zwischen benachbarten Bohrungen 16 um mindestens einen Faktor fünf überschreitet. Des weiteren ist der Durchmesser der Durchgangsbohrungen 16 so gewählt, daß pro sich verjüngender Durchgangsbohrung 16 eine sich verjüngende Lichtleitfaser 5 eingeführt wird und dann über die gesamte Länge der Durchgangsbohrung 16 der Bohrungsquerschnitt den Querschnitt der Lichtleitfaser um maximal einen Faktor zwei überschreitet. Insbesondere ist die Durchgangsbohrung 16 jedoch an dem dem Eintrittsbereich 8 zugewandten Ende nur geringfügig größer als die eingeführte sich verjüngende Lichtleitfaser 5, so daß das Verschmelzen nach Einsetzen der Lichtleitfasern 5 zu einer möglichst geringen Verformung der Lichtleitfasern 5 führt. Bevorzugt liegt an diesem Ende vor dem Verschmelzen weitgehender Formschluß zwischen der sich verjüngenden Lichtleitfaser 5 und der entsprechenden sich verjüngenden Durchgangsbohrung 16 vor.

Der Verschmelzungsprozeß wird bevorzugt in Längsrichtung (axial) mit einer möglichst rotationssymmetrischen Wärmeeinbringung in die Roh-Hüllstruktur 2' durchgeführt. Ein solcher Verschmelzungsprozeß kann in einem später zu entfernenden Bereich der Roh-Hüllstruktur 2' mit eingesetzten Lichtleitfasern 5 und somit außerhalb des resultierenden Faserkopplers 1 durch eine Heizquelle erfolgen, die den Faserkoppler im weiteren Verlauf über den späteren Austrittsbereich (zweites Ende 4) bis hin zum Eintrittsbereich (erstes Ende 3) mit Wärme beaufschlagt. Hierbei bildet der Anfang der Multikapillare einen Schmelzstopp, so daß die Fasern im Eintrittsbereich 8 nicht beeinflusst werden. Alternativ kann im Übergang 9 zwischen im fertigen Koppler unverschmolzenem zu verschmolzenem Bereich gestartet werden und dann die Verschmelzung fortschreitend in Richtung des Austrittsabschnittes (zweites Ende 4) und über dieses hinaus ausgeführt werden.

Aufgrund des weitgehenden Formschlusses zwischen den Lichtleitfasern 5 und den Durchgangsbohrungen 16 kann bei der lateralen Wärmezufuhr durch die Heizquelle eine Verformung der Lichtleitfasern 5 durch die auftretenden Oberflächenspannungen vermieden werden. Im ersten Fall am Ende des Schmelzprozesses und beim alternativen Verfahren insbesondere beim Start des Schmelzprozesses. Da sich in einem derartigen Übergangsbereich (zwischen unverschmolzenem und verschmolzenem Bereich) jedoch laterale Kräfte nicht gänzlich vermeiden lassen, ist dieser Übergang 9 an einer Position, in der sich eine Verformung im Fasermantel 12 nur unwesentlich auf die Kernführung auswirkt, besonders vorteilhaft. Der Übergang 9 wird bevorzugt so positioniert, daß der Faserdurchmesser noch so groß ist, daß keine Verformung des Faserkerns auftritt. Dazu sollte die Lichtleitfaser 5 auf nicht weniger als 80% des ursprünglichen Gesamtdurchmessers der jeweiligen Lichtleitfaser 5 verjüngt sein.

Das Verschmelzen wird (unabhängig von der Richtung beim Durchführen der Verschmelzung) unter an die Roh-Hüllstruktur 2' und/oder die Fasern 5 angelegte Zugspannung durchgeführt. Gegebenenfalls wird dies noch durch Unterdruck in den Durchgangsbohrungen 16 unterstützt.

Durch die Zugspannung kann die zusätzliche Verjüngung zur angestrebten Steigerung des Modenfelddurchmessers relativ zum Kerndurchmesser durch Ausziehen der Kopplerstruktur teilweise oder gänzlich bereits beim Verschmelzen erreicht werden. Es ist jedoch bevorzugt, daß das Ausziehen auf die finale Geometrie in einem dem Verschmelzen nachgeschalteten Prozeßschritt durchgeführt wird. Damit können die geforderten Parameter für die Ausgangsstrahlen exakt eingestellt werden.

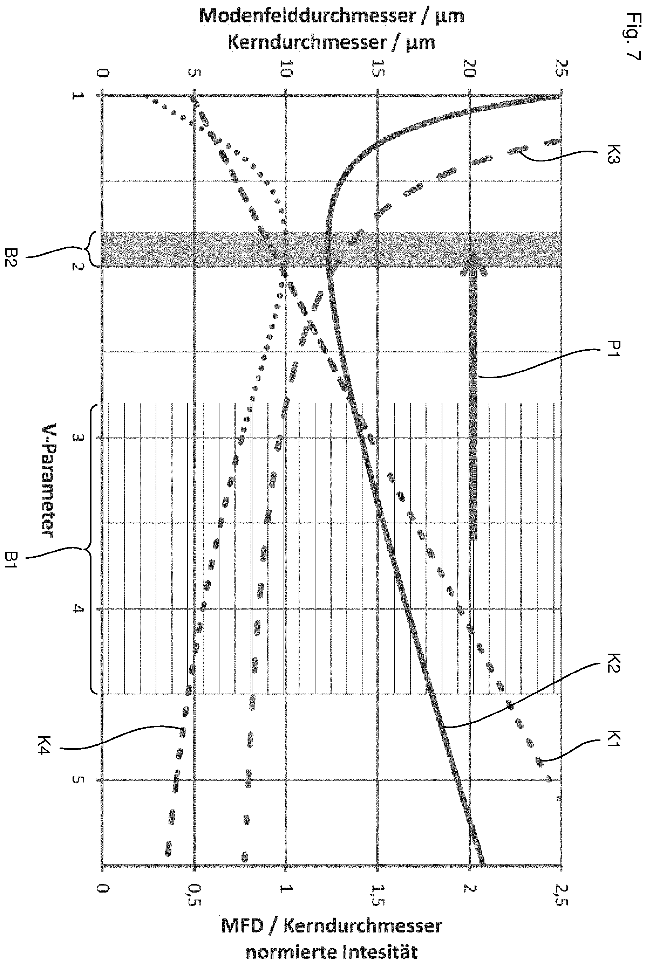

Die möglichen V-Parameterwerte für die Lichtleitfasern 5 sollen nachfolgend in Verbindung mit dem Diagramm gemäß Figur 7 erläutert werden, in dem verschiedene den Faserkoppler 1 kennzeichnende Kenngrößen in Abhängigkeit des V-Parameters dargestellt sind.

Der V-Parameter ist entlang der Abszisse aufgetragen. Die Kurve K1 bezeichnet den Kerndurchmesser in $\mu$m einer Lichtleitfaser 5, die Kurve K2 zeigt den Modenfelddurchmesser (MFD) einer in der Lichtleitfaser 5 geführten Laserstrahlung, die Kurve K3 bezeichnet das Verhältnis von Modenfelddurchmesser zu Kerndurchmesser und die Kurve K4 bezeichnet die normierte Intensität des aus einer der Lichtleitfasern 5 ausgekoppelten Ausgangsstrahls, wobei die Werte für die normierte Intensität entlang der rechten Ordinate und die Werte für die Kurven K1-K3 entlang der linken Ordinate angegeben sind. Alle Werte im Diagramm gemäß Fig. 2 sind für eine numerische Apertur der einzelnen Lichtleitfasern 5 von 0,07 und für eine Wellenlänge der eingekoppelten Eingangsstrahlen von 1,07 $\mu$m angegeben.

Eingangsseitig weisen die Lichtleitfasern 5 einen V-Wert im Bereich von 2,8 und 4,5 auf. Dieser Bereich ist in der Darstellung in Fig. 7 als Bereich B1 gekennzeichnet. Durch die erfindungsgemäße Ausbildung des Faserkopplers liegt am zweiten Ende 4 ein V-Parameterwert im Bereich von 1,8 bis 2,0 (Bereich B2) vor, wobei diese Änderung des V-Parameters durch den Pfeil P1 in Figur 7 angedeutet ist.

Eine Änderung des V-Parameters im Bereich B2 ändert den Modenfelddurchmesser nur sehr gering, so daß ein Ausziehen des Faserkopplers 1 im Bereich des zweiten Endes 4 zu einer deutlichen Änderung der Abstände der Lichtleitfasern 5 und somit der Ausgangsstrahlen führt, ohne daß der Modenfelddurchmesser (oder Strahldurchmesser und Divergenz) wesentlich geändert wird. Damit kann eine Feinanpassung des Füllfaktors durchgeführt werden, ohne den Modenfelddurchmesser stark zu beeinflussen.

Der Bereich von 1,8 - 2,0 für den V-Parameter am zweiten Ende 4 ist bevorzugt, da Werte von größer als 2,0 zu einer schlechteren Füllung des Phasenraums und Werte von kleiner als 1,8 zu einer unerwünschten Abweichung vom Gaußprofil sowie einer schlechteren Reproduzierbarkeit führen.

Es versteht sich von selbst, daß sich anhand der Näherungslösungen für ideale Stufenindexfasern erläuterten grundlegenden Überlegungen zur erfindungsgemäßen Kopplerauslegung auch auf andere Lichtleitfasern übertragen lassen.

Der Austrittsbereich (das zweite Ende 4) wird nach Abschluß der Verschmelzungs- und Ausziehprozesse durch Kürzung der mit den Fasern verschmolzenen und ausgezogenen Roh-Hüllstruktur 2' um die Überschußlänge erzeugt.

Durch die entsprechende Ausgestaltung der Multikapillare 6 kann die Maximalanzahl der Lichtleitfasern 5 und deren Lage zueinander vorbestimmt werden. Daher kann der erfindungsgemäße Faserkoppler 1 mit mehr oder weniger als den beschriebenen sieben Lichtleitfasern 5 und auch abweichend von hexagonalen Anordnung der Lichtleitfasern 5 z.B. quadratisch oder ringförmig realisiert werden.

Durch den Bereich der vollständigen Verschmelzung am zweiten Ende 4 des Faserkopplers 1 wird der angestrebte Überlapp der Strahlprofile (bzw. der Modenfelder) der Eingangsstrahlenbündel 13 erreicht und bietet der Faserkoppler zusätzlich eine robuste und flexible Schnittstelle. Da in diesem Bereich eine eingeschränkte Strahlführung der einzelnen Lichtleitfasern 5 vorliegt, wird durch die verschmolzene rohrförmige Hüllstruktur 2 mittels Sicherstellung der Ausrichtung der Fasern und Stützwirkung eine prinzipiell verbesserte Strahlführung erreicht.

Auch wird sichergestellt, daß innerhalb dieses Bereiches keine durch die Innenrohrstruktur 6 oder durch Verschmelzen induzierte Störung der Strahlführung, insbesondere durch Verformung der Lichtleitfasern 5, erfolgt. Dies wird insbesondere dadurch erreicht, daß der Übergang von nicht oder nur partiell verschmolzenem Bereich zu dem vollständig verschmolzenem Bereich definiert in einem Bereich guter Strahlführung der Einzelfasern 5 erfolgt. Dies ist insbesondere in dem Bereich der Fall, in dem der Gesamtdurchmesser der Fasern 5 noch nicht auf unter 80 % des ursprünglichen Gesamtdurchmessers verjüngt ist. Es liegt somit eine geeignete Anpassung von Material und Geometrie der Lichtleitfasern 5 und der Innenrohrstruktur 6 vor.

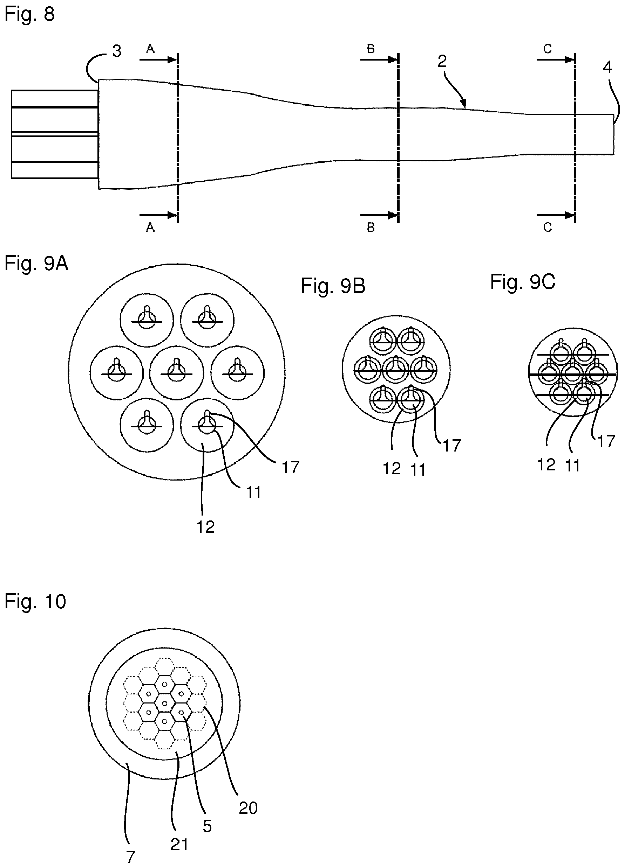

Weiterhin wird mit dem erfindungsgemäßen Faserkoppler 1 erreicht, daß die in den einzelnen Lichtleitfasern 5 geführte Eingangsstrahlen 13 im Ausgangsbereich (und somit spätestens am zweiten Ende 4) zwar überlappen, jedoch die einzelnen Eingangstrahlen 13 weder durch die umgebende Struktur, noch durch die benachbarten Lichtleitfasern nennenswert beeinträchtigt werden. Dies wird dadurch realisiert, daß der Modenfeldquerschnitt im Ausgangsbereich zwar die Abmessung der verschmolzenen einzelnen Lichtleitfasern 5 überschreitet, in dem Bereich nennenswerter Intensität jedoch weitgehend die gleiche Brechzahl wie im Mantelbereich der Lichtleitfaser vorliegt. Hierfür wird das Material der Innenrohrstruktur 6 so gewählt, daß es mit dem des Fasermantels übereinstimmt und ein symmetrisches effektives Brechzahlprofil außerhalb der Kerne entsteht, das dafür sorgt, daß der Laserstrahl ungestört hauptsächlich durch den Kern geführt wird, selbst wenn der Modenfelddurchmesser den Kerndurchmesser überschreitet. Der Kern ist hierbei der Bereich, der sich vom Material mit homogener Brechzahl unterscheidet. So kann der Mode zwar merkliche Intensität im Mantel der benachbarten Lichtleitfaser 5 aufweisen, weist aber nur verschwindende Intensität in dem Kern der benachbarten Lichtleitfaser 5 auf. Die Querschnittsgeometrie des Faserkerns soll möglicht nicht geändert werden. Die Ausdehnung der Moden 17 ist schematisch in Fig. 9A - 9C dargestellt, die die entsprechenden Schnitte A-A, B-B und C-C zu dem in Fig. 8 gezeigten Faserkoppler 1 sind.

Alternativ zu einer Innenrohrstruktur 6 mit einer Vielzahl von runden Bohrungen zur Aufnahme der einzelnen Lichtleitfasern 5 können die Lichtleitfaser 5 selbst so gestaltet werden, daß die Lage der einzelnen Fasern 5 im Koppler 1 zueinander definiert und ein weitgehender Formschluß ermöglicht wird. In diesem Fall kann die Hüllstruktur 2 anstatt der Multikapillare 6 ein Innenrohr 21 mit einer einzigen Durchgangsbohrung mit angepaßtem Querschnitt aufweisen.

So können z.B. Lichtleitfasern 5 mit sich verjüngender hexagonaler Außenkontur in einem sich verjüngenden Innenrohr 21, das vom Hüllrohr 7 umgeben ist, gebündelt sein, wie dies in Fig. 10 angedeutet ist. Auch bildet hier der Anfang des Innenrohrs 21 eine Temperaturbarriere und den Übergang 9 zum verschmolzenen Bereich der Faser mit der Hüllstruktur 2. Bei der Darstellung in Fig. 10 ist noch gestrichelt angedeutet, daß zusätzlich zu den zur Strahlführung benutzten Lichtleitfasern 5, die ein inneres Bündel bilden, ein dieses Bündel umschließender Ring von Fasern 20 in der Hüllstruktur 2 angeordnet werden. Diese zusätzlichen Fasern 20 können kernlose Fasern oder Fasern mit Kern (beispielsweise die gleichen wie im inneren Bündel) sein. Es muß lediglich sichergestellt werden, daß ein ausreichend dicker Ring aus Material mit homogener, dem Mantelmaterial der Lichtleitfasern 5 entsprechender Brechzahl vorliegt, so daß ein symmetrisches effektives Brechzahlprofil außerhalb der Kerne entsteht, das dafür sorgt, daß der Laserstrahl ungestört hauptsächlich durch den Kern geführt wird. Der Kernbereich ist hierbei der Bereich, der sich vom Material mit homogener Brechzahl unterscheidet. Das so um das innere Bündel bereitgestellte Zusatzmaterial erlaubt eine ungestörte Strahlführung auch bei einem Modenfelddurchmesser, der den Durchmesser der ursprünglichen einzelnen Lichtleitfaser 5 überschreitet. Zusätzlich stellen diese äußeren Fasern 20 einen weitgehenden Formschluß zu den inneren Lichtleitfasern 5 sicher, so daß die inneren Lichtleitfasern 5 beim Verschmelzen mit der Hüllstruktur 2 nicht oder nur unwesentlich verformt werden.

Ferner können bei dem erfindungsgemäßen Faserkoppler 1 zur Herstellung zwischen der Roh-Hüllstruktur 2' und den eingeführten Lichtleitfasern 5 Hohlräume zugelassen werden. In diesem Fall werden Lichtleitfasern 5 eingesetzt werden, bei denen die Glastemperatur des Mantelmaterials geringer ist als des Kernmaterials, so daß im Verschmelzungsprozeß das Mantelmaterial die Zwischenräume ausfüllt und die Faserkerne 11 dabei weder so im Querschnitt deformiert oder so verbogen werden, daß die Strahlführung beeinträchtigt wird. Eine Zugspannung auf die Lichtleitfasern 5 stellt sicher, daß die Faserkerne 11 (insbesondere im Übergangsbereich, in dem bei dieser Variante das geringere Verhältnis von Kern- zu Gesamtquerschnitt ein erhöhtes Biegerisiko bei Verformung des Mantels darstellt) keine Faserbiegung erfolgt.

An den Faserkoppler 1 kann direkt und somit an das zweite Ende 4 eine lichtführende Struktur, vorzugsweise eine optische Faser, angekoppelt werden. Da die Austrittsfläche des zweiten Endes 4 vollkommen verschmolzen und somit flexibel präparierbar ist, kann die lichtführende Struktur direkt an diese gekoppelt werden. Bei der optischen Faser der lichtführenden Struktur kann es sich um eine Multi-Mode-Faser handeln, die so ausgelegt ist, daß das gesamte Ausgangsstrahlenbündel 14 in die Kerne der Multi-Mode-Faser überkoppelt, wobei die Multi-Mode-Faser vorzugsweise so ausgelegt ist, daß die Brillanz des Ausgangsstrahlenbündels 14 bei Führung in der Multi-Mode-Faser weitgehend beibehalten wird. Es kann sich auch um eine Doppelkernfaser, insbesondere mit einem in einem Multimodekern eingebetteten Grundmodekern handeln, so daß zentrale Strahlen des Ausgangsstrahlenbündels 14 in den inneren, die übrigen Strahlen in den umgebenden Kern gekoppelt werden. Statt einem Doppelkern bietet sich auch die Verwendung eines zentralen Kerns mit diesen umgebenden Ringen an, die jeweils in ein oder mehrere Strahlen eingekoppelt werden. Die Strahlführung kann dann in dem Kern und den Ringen getrennt erfolgen. Grundsätzlich kann auch eine passende Multikernfaser angekoppelt werden, so daß beispielsweise jeder Lichtleitfaser 5 ein Kern in der Multikernfaser zugeordnet ist.

Alternativ kann eine Einkopplung des Ausgangsstrahlenbündels 14 über eine Freistrahlstrecke in eine lichtführende Struktur, insbesondere eine Faser, erfolgen. Die Freistrahlstrecke kann optional ein oder mehrere abbildende Elemente aufweisen. Ferner ist es möglich, daß direkt an das zweite Ende 4 des Faserkopplers 1 ein abbildendes Element gekoppelt ist.

Der erfindungsgemäße Faserkoppler 1 stellt sicher, daß die Strahlachsen ausgerichtet bleiben und die Ausgangsstrahlen eine Winkeltoleranz aufweisen, die kleiner als ihr Divergenzwinkel ist, so daß die Ausgangsstrahlen noch einzeln adressierbar am Ausgang bzw. am Ende 4 sind.

Der erfindungsgemäße Faserkoppler 1 sorgt auch dafür, daß die Ausgangsstrahlen außerhalb des Kopplers 1 weiterhin gut propagieren also nicht degradieren.

Bei einer alternativen Ausführungsform kann der Faserkoppler 1 am zweiten Ende 4 mit einem sogenannten Endcap versehen sein. Dies besteht z.B. aus einem Quarzglas oder Faserstück ohne Kern und sorgt dafür, daß die Ausgangsstrahlen divergieren. Dies führt zu einer Verminderung der Intensität der Laserstrahlung und zu einer Erhöhung der Zerstörschwelle der Fasergrenzschicht, so daß eine Antireflexions- oder Filterschicht auf die Austrittsfläche des Endcap aufgebracht werden kann.

## Patentansprüche

1. Faserkoppler mit
   einer rohrförmigen Hüllstruktur (2) und
   mehreren in der Hüllstruktur (2) angeordneten Lichtleitfasern (5), die jeweils einen Faserkern (11) und einen diesen umgebenden Fasermantel (12) aufweisen, um Laserstrahlung zu führen, und die sich jeweils vom ersten bis zum zweiten Ende (3, 4) der Hüllstruktur (2) erstrecken, wobei die Hüllstruktur einen Verjüngungsabschnitt (10) aufweist, der sich in einer ersten Richtung vom ersten zum zweiten Ende (3, 4) hin verjüngt, wobei im Verjüngungsabschnitt (10) bei jeder Lichtleitfaser in der ersten Richtung sowohl ein erstes Verhältnis von Durchmesser des Faserkerns (11) zu Durchmesser des Fasermantels (12) als auch ein zweites Verhältnis vom Durchmesser des Modenfeldes der in der Lichtleitfaser (5) geführten Laserstrahlung zu Durchmesser des Faserkerns (11) zunimmt

2. Faserkoppler nach Anspruch 1, wobei die Lichtleitfasern (5) am zweiten Ende (4) direkt und/oder über die Hüllstruktur vollflächig miteinander verschmolzen sind.

3. Faserkoppler nach Anspruch 1, bei dem die Lichtleitfasern (5) im Verjüngungsabschnitt (10) direkt und/oder über die Hüllstruktur (2) vollflächig miteinander verschmolzen sind.

4. Faserkoppler nach Anspruch 2 oder 3, bei dem der Übergang vom unverschmolzenen Bereich zum vollflächig verschmolzenen Bereich an einer Stelle im Faserkoppler (1) liegt, an der die Lichtleitfasern (5) auf maximal 80 % ihres ursprünglichen Gesamtdurchmessers verjüngt sind.

5. Faserkoppler nach einem der obigen Ansprüche, bei dem für die Zunahme des ersten Verhältnisses die Dicke des Fasermantels (12) in der ersten Richtung abnimmt.

6. Faserkoppler nach einem der obigen Ansprüche, bei dem der maximale Wert des zweiten Verhältnisses so gewählt ist, daß trotz einer Überlappung der Moden in benachbarten Lichtleitfasern (5) noch eine individuelle Strahlführung in jeder Lichtleitfaser (5) vorliegt und/oder bei dem am zweiten Ende (4) eine der Brechzahl des Mantelmaterials entsprechende homogene Brechzahl zwischen den Kernen der Lichtleitfasern (5) vorliegt.

7. Faserkoppler nach einem der obigen Ansprüche, bei dem am zweiten Ende (4) um jeden Kern der Lichtleitfasern (5) über eine Querschnittsfläche mit einem Außenradius, der dem Abstand zum nächsten benachbarten Kern entspricht, ein homogene, dem Mantelmaterial der Lichtleitfaser (5) entsprechende Brechzahl vorliegt, und/oder bei dem für die Zunahme des zweiten Verhältnisses der Durchmesser des Faserkerns (11) in der ersten Richtung abnimmt.

8. Faserkoppler nach einem der obigen Ansprüche, bei dem die Lichtleitfasern als grundmodige oder niedermodige Lichtleitfasern ausgebildet sind.

9. Faserkoppler nach einem der obigen Ansprüche, bei dem die Hüllstruktur (2) eine Multikapillare (6) aufweist, die für jede Lichtleitfaser (5) genau eine Durchgangsbohrung (16) aufweist.

10. Verfahren zur Herstellung eines Faserkopplers, bei dem
mehrere Lichtleitfasern, die jeweils einen Faserkern und einen diesen umgebenden Fasermantel aufweisen, mit einer in Längsrichtung der Lichtleitfasern abnehmender Manteldicke bereitgestellt werden, die mehreren Lichtleitfasern in eine rohrförmige Roh-Hüllstruktur so eingeführt werden, daß sie nebeneinander liegen,
die Lichtleitfasern direkt und/oder über die Roh-Hüllstruktur miteinander verschmolzen werden und die Roh-Hüllstruktur mit den eingeführten Lichtleitfasern in einem Verjüngungsabschnitt in einer ersten Richtung verjüngt wird, so daß im Verjüngungsabschnitt bei jeder Lichtleitfaser in der ersten Richtung sowohl ein erstes Verhältnis von Durchmesser des Faserkerns zu Durchmesser des Fasermantels als auch ein zweites Verhältnis von Durchmesser des Modenfeldes der in der Lichtleitfaser zu führenden Laserstrahlung zu Durchmesser des Faserkerns zunimmt.

11. Verfahren nach Anspruch 10, bei dem die Roh-Hüllstruktur eine Innenrohrstruktur mit Bohrungen für jede Lichtleitfaser aufweist, wobei in jede der Bohrungen jeweils eine Lichtleitfaser eingeführt wird, oder bei dem die Roh-Hüllstruktur ein Rohr mit einer Bohrung aufweist, in die die Lichtleitfasern eingeführt werden und dann direkt aneinander liegen.

12. Verfahren nach Anspruch 11, bei dem die Bohrung(en) verjüngend ausgebildet wird/werden bevor die Lichtleitfasern eingeführt werden.

13. Verfahren nach einem der Ansprüche 10 bis 12, bei dem beim Verschmelzen der Lichtleitfasern die Lichtleitfasern mit Zugspannung beaufschlagt werden.

14. Verfahren nach einem der Ansprüche 10 bis 13, bei dem in axialer Richtung ein Übergang von in vollem Umfang unverschmolzenen Lichtleitfasern bis zu vollumfänglich miteinander und/oder über die Roh-Hüllstruktur verschmolzenen Lichtleitfasern gebildet wird.

15. Verfahren nach einem der Ansprüche 10 bis 14, bei dem ein zweites Verhältnis von Durchmesser des Modenfeldes der in der Lichtleitfaser zu führenden Laserstrahlung zu Durchmesser des Faserkerns durch Ausziehen der verschmolzenen Lichtleitfasern gesteigert wird.

**Claims**

1. Fibre coupler with
a tubular enveloping structure (2) and
several optical fibres (5) arranged in the enveloping structure (2), each of which has a fibre core (11) and a fibre cladding (12) surrounding same, in order to conduct laser radiation, and each of which extends from the first as far as the second end (3, 4) of the enveloping structure (2), wherein the enveloping structure has a tapering section (10) which is tapered in a first direction from the first as far as the second end (3, 4), wherein, in the tapering section (10), both a first ratio of the diameter of the fibre core (11) to the diameter of the fibre cladding (12) and also a second ratio of the diameter of the mode field of the laser radiation conducted in the optical fibre (5) to the diameter of the fibre core (11), increases in the first direction for each optical fibre.

2. Fibre coupler according to claim 1, wherein the optical fibres (5) are completely fused with one another at the second end, directly and/or via the enveloping structure.

3. Fibre coupler according to claim 1, in which the optical fibres (5) are completely fused with one another in the tapering section (10), directly and/or via the enveloping structure (2).

4. Fibre coupler according to claim 2 or 3, in which the transition from the unfused region to the completely fused region lies at a point in the fibre coupler (1) at which the optical fibres (5) are tapered to at most 80% of their original overall diameter.

5. Fibre coupler according to one of the previous claims, in which the thickness of the fibre cladding (12) decreases in the first direction in order to have the increase of the first ratio.

6. Fibre coupler according to one of the previous claims, in which the maximum value of the second ratio is chosen such that there is an individual beam conduction in each optical fibre (5) in spite of an overlapping of the modes in adjacent optical fibres (5) and/or in which, at the second end (4), there is a homogeneous refractive index between the cores of the optical fibres (5) which homogeneous refractive index corresponds to the refractive index of the cladding material.

7. Fibre coupler according to one of the previous claims, in which, at the second end (4) about each core of the optical fibres (5) along a cross-section surface which corresponds to the distance to the next adjacent core there is an homogeneous refractive index corresponding to the cladding material of the optical fibre (5) and/or in which the diameter of the fibre core (11) decreases in the first direction in order to have the increase of the second ratio.

8. Fibre coupler according to one of the previous claims, in which the optical fibres are designed as fundamental mode or low mode optical fibres.

9. Fibre coupler according to one of the previous claims, in which the enveloping structure (2) has a multicapillary (6) which has precisely one through bore (16) for each optical fibre (5).

10. Method for producing a fibre coupler, in which several optical fibres are provided, each of which has a fibre core and a fibre cladding surrounding same, with a cladding thickness decreasing in longitudinal direction of the optical fibres, the several optical fibres are inserted in a tubular raw enveloping structure such that they lie adjacent to one another, the optical fibres are fused with one another directly and/or via the raw enveloping structure and the raw enveloping structure is tapered with the inserted optical fibres in a tapering section in a first direction with the result that, in the tapering section, both a first ratio of the diameter of the fibre core to the diameter of the fibre cladding and also a second ratio of the diameter of the mode field of the laser radiation to be conducted in the optical fibre to the diameter of the fibre core increases in the first direction increases for each optical fibre.

11. Method according to claim 10, in which the raw enveloping structure has an internal tube structure with bores for each optical fibre, wherein an optical fibre is inserted in each of the bores or in which the raw enveloping structure has a tube with a bore in which the optical fibres are inserted and then lie directly adjacent to one another.

12. Method according to claim 11, in which the bore(s) are formed tapered before the optical fibres are inserted.

13. Method according to one of claims 10 to 12, in which the optical fibres are charged with tensile stress when same are being fused.

14. Method according to one of claims 10 to 13, in which a transition from fully unfused optical fibres to optical fibres which are fully fused with one another and/or fused via the raw enveloping structure is formed in axial direction.

15. Method according to one of claims 10 to 14, in which a second ratio of the diameter of the mode field of the laser radiation to be conducted in the optical fibre to the diameter of the fibre core is increased by drawing the fused optical fibres.

**Revendications**

1. Coupleur pour fibres comprenant une structure de gaine (2) de forme tubulaire et plusieurs fibres optiques (5) disposées dans la structure de gaine (2), lesquelles possèdent respectivement une âme de fibre (11) et une enveloppe de fibre (12) qui entoure celle-ci, pour guider un rayonnement laser, et lesquelles s'étendent respectivement d'une première à une deuxième extrémité (3, 4) de la structure de gaine (2), la structure de gaine possédant une portion de rétrécissement (10) qui se rétrécit dans une première direction de la première vers la deuxième extrémité (3, 4), dans la portion de rétrécissement (10), pour chaque fibre optique, un premier rapport du diamètre de l'âme de fibre (11) par le diamètre de l'enveloppe de fibre (12) et un deuxième rapport du diamètre du champ modal du rayonnement laser guidé dans la fibre optique (5) par le diamètre de l'âme de fibre (11) augmentent tous deux dans la première direction.

2. Coupleur pour fibres selon la revendication 1, les fibres optiques (5) étant fusionnées ensemble sur toute la surface à la deuxième extrémité (4), directement et/ou par le biais de la structure de gaine.

3. Coupleur pour fibres selon la revendication 1, avec lequel les fibres optiques (5) sont fusionnées ensemble sur toute la surface dans la portion de rétrécissement (10), directement et/ou par le biais de la structure de gaine (2).

**4.** Coupleur pour fibres selon la revendication 2 ou 3, avec lequel la transition de la zone non fusionnée à la zone fusionnée sur toute la surface se trouve à un endroit dans le coupleur pour fibres (1) au niveau duquel les fibres optiques (5) sont rétrécies à un maximum de 80 % de leur diamètre total originel.

**5.** Coupleur pour fibres selon l'une des revendications précédentes, avec lequel l'augmentation du premier rapport est obtenue par une diminution de l'épaisseur de l'enveloppe de fibre (12) dans la première direction.

**6.** Coupleur pour fibres selon l'une des revendications précédentes, avec lequel la valeur maximale du deuxième rapport est choisie de telle sorte que malgré un chevauchement des modes dans les fibres optiques (5) voisines, il existe encore un guidage de rayon individuel dans chaque fibre optique (5) et/ou avec lequel un indice de réfraction homogène correspondant à l'indice de réfraction du matériau de l'enveloppe est présent entre les âmes des fibres optiques (5) au niveau de la deuxième extrémité (4).

**7.** Coupleur pour fibres selon l'une des revendications précédentes, avec lequel un indice de réfraction homogène, correspondant au matériau de l'enveloppe des fibres optiques (5), est présent au niveau de la deuxième extrémité (4) autour de chaque âme des fibres optiques (5) sur une surface de section transversale ayant un rayon extérieur qui correspond à la distance par rapport à l'âme voisine la plus proche, et/ou avec lequel l'augmentation du deuxième rapport est obtenue par une diminution du diamètre de l'âme de fibre (11) dans la première direction.

**8.** Coupleur pour fibres selon l'une des revendications précédentes, avec lequel les fibres optiques sont réalisées sous la forme de fibres optiques à mode fondamental ou à faible mode.

**9.** Coupleur pour fibres selon l'une des revendications précédentes, avec lequel la structure de gaine (2) possède un capillaire multiple (6) qui possède exactement un orifice de passage (16) pour chaque fibre optique (5).

**10.** Procédé de fabrication d'un coupleur pour fibres, selon lequel
plusieurs fibres optiques, lesquelles possèdent respectivement une âme de fibre et une enveloppe de fibre qui entoure celle-ci, sont fournies avec une épaisseur d'enveloppe qui diminue dans le sens de la longueur des fibres optiques,
les plusieurs fibres optiques sont introduites dans une structure de gaine brute de forme tubulaire de telle sorte qu'elles reposent les unes à côté des autres,

les fibres optiques sont fusionnées entre elles directement et/ou par le biais de la structure de gaine brute et la structure de gaine brute dans laquelle sont introduites les fibres optiques est rétrécie dans une portion de rétrécissement dans une première direction de telle sorte que dans la portion de rétrécissement, pour chaque fibre optique, un premier rapport du diamètre de l'âme de fibre par le diamètre de l'enveloppe de fibre et un deuxième rapport du diamètre du champ modal du rayonnement laser guidé dans la fibre optique par le diamètre de l'âme de fibre augmentent tous deux dans la première direction.

**11.** Procédé selon la revendication 10, selon lequel la structure de gaine creuse possède une structure tubulaire interne munie d'orifices pour chaque fibre optique, une fibre optique étant respectivement insérée dans chacun des orifices, ou selon lequel la structure de gaine creuse possède un tube muni d'un orifice dans lequel sont insérées les fibres optiques qui reposent ensuite directement les unes contre les autres.

**12.** Procédé selon la revendication 11, selon lequel le ou les orifice(s) est/sont réalisé(s) avec rétrécissement avant que les fibres optiques soient insérées.

**13.** Procédé selon l'une des revendications 10 à 12, selon lequel les fibres optiques sont soumises à une contrainte de traction lors de la fusion des fibres optiques.

**14.** Procédé selon l'une des revendications 10 à 13, selon lequel une transition de fibres optiques non fusionnées sur toute leur étendue vers des fibres optiques fusionnées entre elles sur toute leur étendue et/ou par le biais de la structure de gaine brute est formée dans la direction axiale.

**15.** Procédé selon l'une des revendications 10 à 14, selon lequel une augmentation d'un deuxième rapport du diamètre du champ modal du rayonnement laser à guider dans la fibre optique par le diamètre de l'âme de fibre est obtenue par étirage des fibres optiques fusionnées.

Fig. 1

Fig. 2

Fig. 3A

Fig. 3B

Fig. 3C

Fig. 4

Fig. 5

Fig. 6

Fig. 7

Fig. 8

Fig. 9A

Fig. 9B

Fig. 9C

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2071376 A1
- US 3912362 A
- US 20100278486 A1
- US 20100189138 A1